**Europäisches Patentamt**

**European Patent Office**

**Office européen des brevets**

(19)

(11) Veröffentlichungsnummer: **0 028 715**
**B1**

(12) ## EUROPÄISCHE PATENTSCHRIFT

(45) Veröffentlichungstag der Patentschrift:
16.05.84

(21) Anmeldenummer: 80106208.4

(22) Anmeldetag: 11.10.80

(51) Int. Cl.³: **B 60 N 3/04,** B 32 B 31/26,
B 29 C 27/04

(54) Bodenmatte, insbesondere für Kraftfahrzeuge.

(30) Priorität: 09.11.79 DE 2945285

(43) Veröffentlichungstag der Anmeldung:
20.05.81 Patentblatt 81/20

(45) Bekanntmachung des Hinweises auf die Patenterteilung:
16.05.84 Patentblatt 84/20

(84) Benannte Vertragsstaaten:
AT BE CH DE FR GB IT LI LU NL SE

(56) Entgegenhaltungen:
DE - A - 1 719 107
DE - A - 2 402 859
DE - A - 2 504 691
DE - A - 2 537 832
DE - A - 2 707 727
FR - A - 2 204 493

(73) Patentinhaber: DYNAMIT NOBEL
AKTIENGESELLSCHAFT, Postfach 1209,
D-5210 Troisdorf, Bez. Köln (DE)

(72) Erfinder: Alfter, Franz-Werner, Im Mittelfeld 36,
D-5200 Siegburg (DE)
Erfinder: Breitscheidel, Hans-Ulrich,
Kapellenstrasse 43a, D-5200 Siegburg (DE)

## Bodenmatte, insbesondere für Kraftfahrzeuge

Die Erfindung bezieht sich auf eine Bodenmatte aus vernetztem Polyolefinschaumstoff insbesondere für die Auskleidung der Innenräume von Kraftfahrzeugen.

Aus der DE-OS 25 04 691 sind bereits im elastischen oder plastischen Zustand unter Anwendung von Druck und Wärme geformte Kofferraum- bzw. Bodenmatten für Kraftfahrzeuge oder andere Transportmittel aus einem ggf. kaschierten, geschlossenzelligen und vorzugsweise chemisch vernetzten Polyäthylenschaumstoff mit einer Raumdichte von 30 bis 200 kg/m³ bekannt. Diese Kofferraum- bzw. Bodenmatten können sowohl einschichtig als auch mehrschichtig aus Polyäthylenschaumstoffbahnen mit unterschiedlicher Raumdichte gefertigt sein, wobei die Polyäthylenschaumstoffbahn mit der höheren Raumdichte eine verschleißfestere Oberfläche gewährleistet. Es hat sich gezeigt, daß Polyäthylenschaumstoffmatten mit hohen Raumdichten bzw. kaschiert mit Polyäthylenfolie zwar mancherlei Beanspruchungen gerecht werden, jedoch den Beanspruchungen im Trittbereich bzw. Fußbereich von Bodenmatten in Fahrgasträumen der Kraftfahrzeuge auf Dauer nicht gewachsen sind. Es ist bereits bekannt, Teppichauskleidungen von Fahrgasträumen von Kraftfahrzeugen im Trittbereich beispielsweise mittels aufgeschweißter oder aufgeklebter Kunststoffplatten, deren Oberfläche ggf. geprägt ist, zu verstärken.

Der Erfindung liegt die Aufgabe zugrunde, Bodenmatten aus vernetzten Polyolefinschaumstoffen ebenfalls mit einer verschleißfesteren Oberfläche im Trittbereich auszustatten. Hierbei ergibt sich die Schwierigkeit, daß geeignete Trittschutzauflagen aus thermoplastischem Kunststoff wie PVC sich nicht durch Schweißen oder Kleben einwandfrei und haftfest mit vernetztem Polyolefinschaumstoff der Bodenmatten verbinden lassen. Bei diesem Verbund ist zudem auch Rücksicht zu nehmen auf die Schaumstruktur der Bodenmatte, die möglichst erhalten bleiben soll.

Die Erfindung löst die gestellte Aufgabe der Ausrüstung einer Bodenmatte aus vernetztem Polyolefinschaumstoff mit einer Trittschutzauflage durch eine haftfest aufgebrachte Trittschutzauflage aus einem Verbund einer im hochfrequenten elektrischen Feld dielektrisch erwärmbaren thermoplastischen Kunststoffolie mit einer vernetzten Polyolefinschaumstoffschicht, wobei die Polyolefinschaumstoffschichten der Trittschutzauflage und der Bodenmatte mittels Erwärmung im Hochfrequenzfeld miteinander verschweißt sind und die Schaumstruktur der Bodenmatte im Bereich der Verbindungsfläche weitgehend erhalten bleibt. Der erfindungsgemäße Verbund verschiedener Materialien führt zu einer Bodenmatte mit verschleißfester Oberfläche, geeignet als Trittschutz, der die Eigenschaften der verschiedenen Materialien optimal nutzt. Durch den Einsatz einer im hochfrequenten elektrischen Feld dielektrisch erwärmbaren thermoplastischen Kunststoffolie ist es möglich, durch Hochfrequenzerwärmung auf indirektem Weg eine haftfeste Verbindung der Trittschutzauflage mit der Bodenmatte herzustellen. Bevorzugt sind Folien aus Kunststoff mit einer Dielektrizitätskonstanten von 2,5 bis 6 und einem dielektrischen Verlustfaktor $< $ als $1{,}5 \cdot 10^{-3}$, insbesondere Polyvinylchlorid bzw. Weich-Polyvinylchlorid, ABS-Polymere, Äthylencopolymerisate oder Polyamide vorgesehen.

Die Bodenmatte besteht bevorzugt aus einer chemisch vernetzten Polyäthylenschaumstoffbahn, hergestellt beispielsweise nach dem in der DE-AS 16 94 130 beschriebenen Verfahren die bevorzugt unter Einwirkung von Druck und Wärme entsprechend der Gestalt des auszukleidenden Innenraumes des Kraftfahrzeuges geformt ist. Sofern die Bodenmatte einschichtig aus einer chemisch vernetzten Polyäthylenschaumstoffbahn geformt wird, wird bevorzugt ein Schaumstoff mit einer Raumdichte von 100 bis 150 kg/m³ mit einer Dicke von 5 bis 10 mm eingesetzt. Dieser Schaumstoff genügt sowohl den Anforderungen bezüglich der isolierenden Eigenschaften als auch der Abriebfestigkeit der Oberfläche außerhalb des Trittschutzes. Es ist auch vorteilhaft zur Verringerung des Gesamtgewichtes der Bodenmatte als auch ggf. aus wirtschaftlichen Erwägungen die Bodenmatte aus zwei vollflächig miteinander verbundenen Bahnen aus chemisch vernetztem Polyäthylenschaumstoff zu formen, die miteinander kaschiert sind, wobei die die Nutzseite bildende Polyäthylenschaumstoffbahn eine Raumdichte von 150 bis 200 kg/m³ und eine Dicke von 2 bis 5 mm und die die Rückseite bildende Polyäthylenschaumstoffbahn eine Raumdichte von 30 bis 70 kg/m³ und eine Dicke von 4 bis 10 mm aufweisen.

Der Polyäthylenschaumstoff mit der höheren Raumdichte erhöht die Abriebfestigkeit und Verschleißfestigkeit der Nutzseite, während die Polyäthylenschaumstoffbahn mit der niedrigeren Raumdichte die Polsterung und Isolierung der Auskleidung des Innenraumes des Kraftfahrzeuges hinreichend bewirkt.

Wesentlicher Erfindungsgedanke für die Bodenmatte ist der Einsatz einer Trittschutzauflage aus einem Verbund, wobei die mit der Bodenmatte zu verbindende Seite der Trittschutzauflage von einer Schicht aus dem gleichen Polyolefinschaumstoff wie die Bodenmatte nur ggf. mit unterschiedlichem Raumgewicht, gebildet wird. Damit wird eine homogene Verbindung, insbesondere durch Verschweißen, zwischen Bodenmatte und Trittschutzauflage ermöglicht, die ein Ablösen der Trittschutzauflage im Gebrauch von der Bodenmatte mit Sicherheit verhindert.

Nach einer weiteren Ausführung der Erfindung sind die die Trittschutzauflage bildende Kunststoffolie und die Polyolefinschaumstoffschicht mittels eines unter Wärmeeinwirkung vernetzbaren Haftvermittlers verbunden. Eine bevorzugte Werkstoffkombination sieht vor, für die Trittschutzauflage eine Weich-PVC-Folie einzusetzen, die unter Verwendung eines hydroxylgruppenhaltigen Acrylharzes und eines Härters auf Isocyanatbasis mit einer chemisch vernetzten Polyäthylenschaumstoffschicht flammkaschiert ist. Die Herstellung eines solchen Verbundes ist beispielsweise in der DE-OS 27 07 727 beschrieben, wobei gemäß der vorliegenden Erfindung dieser Verbund sich zu der gewünschten Bodenmatte mit Trittschutzauflage einsetzen und verarbeiten läßt.

Bevorzugt wird nach der Erfindung für die Polyolefinschaumstoffschicht der Trittschutzauflage eine Raumdichte von 70 bis 100 kg/m$^3$ und eine Dicke der Schicht von 2 bis 5 mm vorgesehen.

In Weiterbildung der Erfindung ist zur Erhöhung der Trittfestigkeit und Stabilität zwischen der eigentlichen Bodenmatte und der Trittschutzauflage eine gitterförmige bzw. grobmaschige Verstärkungseinlage insbesondere ein Gelege aus Glasfasern oder Polyesterfasern vorgesehen.

In Abwandlung der Erfindung ist es auch möglich, zusätzlich zwischen Bodenmatte und Trittschutzauflage eine mittels Hochfrequenz erwärmbare Hilfsschweißfolie, insbesondere aus einem Schmelzkleber oder einer Äthylenvinylacetatcopolymerfolie mit einem Acetatanteil von 8 bis 60% anzuordnen.

Eine mögliche Verfahrensweise nach der Erfindung arbeitet in der Weise, daß die die Bodenmatte bildende Polyolefinschaumstoffbahn auf eine Temperatur von etwa 120 bis 160° C erwärmt und mittels Vakuum oder Überdruck zu der gewünschten Gestalt der Bodenmatte verformt wird, hierauf die Trittschutzauflage mit ihrer Schaumstoffseite aufgelegt wird und in dieser Form einem Hochfrequenzfeld ausgesetzt wird, derart, daß die Kunststoffolie der Trittschutzauflage durch das Hochfrequenzfeld erwärmt und von der erwärmten Kunststoffolie Wärme auf die damit verbundenen Polyolefinschaumstoffe übertragen wird, wodurch die Oberflächen der Polyolefinschaumstoffschicht der Trittschutzauflage und der Polyolefinschaumstoffbahn der Bodenmatte angeschmolzen werden und mit einander verschweißen. Für die Verbindung zwischen der Trittschutzauflage und der Bodenmatte ist insbesondere von Bedeutung, daß der Verbund aus Kunststoffolie und Polyolefinschaumstoff der Trittschutzauflage sich durch die Erwärmung im Hochfrequenzfeld nicht trennt.

Eine andere Verfahrensweise zum Herstellen einer Bodenmatte mit Trittschutzauflage sieht vor, daß auf die die Bodenmatte bildende Polyolefinschaumstoffbahn die Trittschutzauflage mit ihrer Schaumstoffseite auf der Polyolefinschaumstoffbahn aufliegend aufgebracht wird und einem Hochfrequenzfeld ausgesetzt wird, derart, daß die Kunststoffolie der Trittschutzauflage durch das Hochfrequenzfeld erwärmt und von der erwärmten Kunststoffolie die Wärme auf die verbundene Polyolefinschaumstoffschicht übertragen wird, wodurch die Oberflächen der Polyolefinschaumstoffschicht der Trittschutzauflage und der Polyolefinschaumstoffbahn der Bodenmatte angeschmolzen werden und miteinander verschweißen, danach der Bodenmatte entsprechende Zuschnitte gestanzt und auf eine Temperatur von etwa 120 bis 160° C erwärmt und mittels Vakuum zu der gewünschten Gestalt der Bodenmatte verformt werden.

Die Verbindung zwischen Trittschutzauflage und Bodenmatte unter Einwirkung eines Hochfrequenzfeldes bewirkt gleichzeitig unter Einwirkung von Druck vorgenommen, wobei die Trittschutzauflage ganzflächig oder auch nur linienförmig mit Druck beaufschlagt und entsprechend mit der Bodenmatte verbunden wird. Das Verfahren zum Verbinden der Trittschutzauflage auf die Bodenmatte sieht also vor, im Verbindungsbereich schweißfähigen Schaumstoff, bevorzugt chemisch vernetzten Polyäthylenschaumstoff anzuordnen, der dann indirekt mittels eines Hochfrequenzfeldes erwärmt und unter Druck verbunden wird, indem eine Primärerwärmung der Kunststoffolie der Trittschutzauflage mittels Hochfrequenz erfolgt, und diese Wärme dann sekundär auf die hiermit verbundene Polyolefinschaumstoffschicht übertragen und durch diese auf die Oberfläche der Bodenmatte, die ebenfalls aus Polyolefinschaumstoffschicht besteht, übertragen wird, wobei die Grenzschichten plastisch werden und miteinander verschmelzen. Auf diese Weise wird ein homogener unlösbarer Verbund hergestellt.

Bevorzugt wird für die Trittschutzauflage eine Weich-PVC-Folie eingesetzt, die mit einem hydroxylgruppenhaltigen Acrylharz zusammen mit einem Härter auf Isocyanatbasis beschichtet und dann mit einer vernetzten Polyolefinschaumstoffbahn flammkaschiert wird. Eine solche Trittschutzauflage aus Weich-PVC und Polyolefinschaumstoff unter Anwendung eines entsprechenden Haftvermittlers, der bei Wärmeeinwirkung vernetzt, bringt den Vorteil, daß während der Hochfrequenzeinwirkung und Verschweißung zwischen Trittschutzauflage und Bodenmatte der Verbund der Trittschutzauflage erhalten bleibt.

Zur weiteren Erhöhung der mechanischen Eigenschaften kann zwischen Trittschutzauflage und Bodenmatte eine gitterförmige bzw. grobmaschige Verstärkungseinlage, insbesondere ein Gelege aus Glasfasern oder Polyesterfasern eingelegt werden, wobei das Verschweißen zwischen Trittschutzauflage und Bodenmatte durch die Maschen des Geleges hindurch erfolgt.

In Weiterbildung der Erfindung ist es möglich, während des Einwirkens des Hochfrequenzfeldes die Kunststoffolienoberfläche der Trittschutzauflage zu prägen.

Es ist auch möglich, zur Erhöhung und Beschleunigung der Hochfrequenzschweißung und des Wärmeüberganges zwischen Trittschutzauflage und Bodenmatte eine Hilfsschweißfolie, beispielsweise aus einem Schmelzkleber oder einer Mischpolymerisatfolie aus einem Äthylenvinylacetat-Copolymer einzulegen.

Durch die Erfindung wird es möglich, Bodenmatten aus vernetzten Polyolefinschaumstoffen für die Auskleidung von Innenräumen von Kraftfahrzeugen mit einem Trittschutz aus Kunststoff, vorzugsweise einer PVC-Folie oder Platte an den stark beanspruchten Stellen im Fußbereich auszustatten. Damit wird es möglich, den Fahrgastraum eines Kraftfahrzeuges einheitlich mit einem geformten an diesen angepaßten Matte incl. haftfest verbundenem Trittschutz auszustatten. Zugleich erhält die Erfindung den Schaumstoffcharakter der Bodenmatte und ermöglicht einen haftfesten homogenen Verbund zwischen so ungleichartigen Materialien wie der Kunststoffolie, vorzugsweise PVC des Trittschutzes und dem vernetzten Polyolefinschaumstoff der Bodenmatte.

Die Erfindung ist in der Zeichnung anhand von Beispielen näher erläutert. Es zeigen

Fig. 1 und 2 im Querschnittschnitt auszugsweise verschiedene Bodenmatten,

Fig. 3 im Querschnitt den Aufbau der Trittschutzauflage und

Fig. 4 und 5 auszugsweise im Querschnitt Bodenmatte mit Trittschutzauflage,

Fig. 6 den auszugsweisen Querschnitt durch eine verformte Bodenmatte,

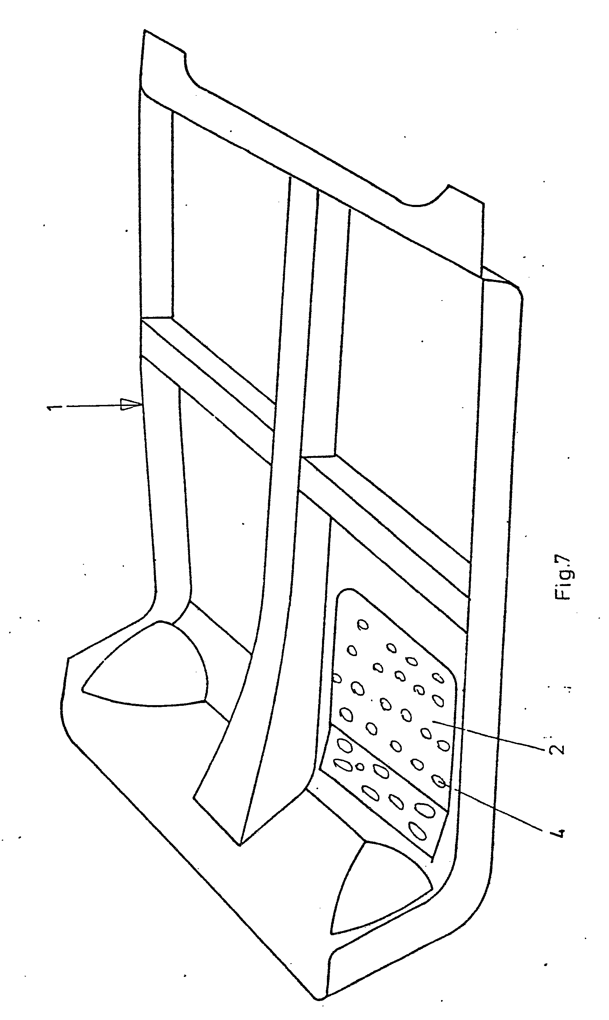

Fig. 7 die perspektivische Ansicht einer Bodenmatte mit Trittschutzauflage für ein Kraftfahrzeug-Fahrgastraum.

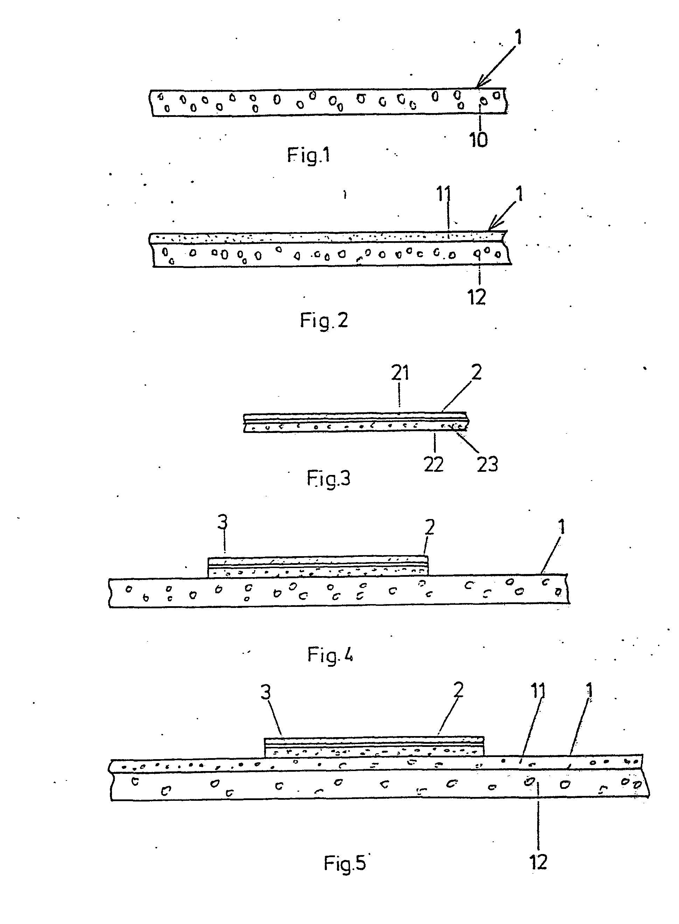

Die Bodenmatten nach der Erfindung dienen vorzugsweise zum Auskleiden von Innenräumen, insbesondere Fahrgasträumen von Kraftfahrzeugen oder anderen Transportmitteln, wobei die Bodenmatten an sich mit einer abriebfesten, verschleißfesten, vorzugsweise öl- und benzinbeständigen Oberfläche ausgerüstet sind und darüber hinaus zumindest partiell mit einem zusätzlichen Trittschutz, insbesondere aus einem thermoplastischem Kunststoff, wie PVC versehen sind. Die Bodenmatte 1 nach Fig. 1 und 2 ist bevorzugt aus einem chemisch vernetztem Polyäthylenschaumstoff hergestellt. Wenn sie nur einschichtig ausgebildet ist, so wird bevorzugt eine Polyäthylenschaumstoffbahn 10 mit einer Rohdichte von 100 bis 150 kg/m³ mit einer bevorzugten Dicke von 6 bis 8 mm eingesetzt. Nach der Verformung der Polyäthylenschaumstoffbahn 10 zu der die Auskleidung bildenden Bodenmatte verringern sich die Wanddicken je nach dem örtlichen Verformungsgrad etwas. In der Fig. 2 ist schematisch der zweischichtige Aufbau der Bodenmatte 1 aus den Polyäthylenschaumstoffbahnen 11, 12 mit unterschiedlicher Raumdichte dargestellt. Die Polyäthylenschaumstoffbahnen 11, 12 sind vorzugsweise miteinander flammkaschiert, wobei für die Nutzseite die Polyäthylenschaumstoffbahn 11 mit der höheren Raumdichte von vorzugsweise 150 bis 200 kg/m³ und für die Rückseite die Polyäthylenschaumstoffbahn 12 mit der wesentlich niedrigeren Raumdichte von vorzugsweise 30 bis 50 kg/m³ vorgesehen ist. Bei einer vorzugsweisen Gesamtstärke der noch unverformten Bodenmatte zwischen 6 bis 8 mm wird für die Polyäthylenschaumstoffbahn 11 eine bevorzugte Dicke von 2 bis 3 mm vorgesehen.

Die der Erhöhung der Verschleißfestigkeit dienende und auf die Bodenmatte 1 aufzubringende Trittschutzauflage 2 ist schematisch im Querschnitt in Fig. 3 dargestellt. Sie besteht aus einer für den Trittschutz geeigneten thermoplastischen Kunststoffolie bzw. -platte 21 mit einer bevorzugten Dicke zwischen 1 bis 2 mm. Diese Folie 21 ist rückseitig mit einer vernetzten Polyolefinschaumstoffbahn 23, die eine bevorzugte Dicke von 2 bis 3 mm bei einer nicht allzu hohen Raumdichte aufweist, verbunden. Bei dem Verbindungsverfahren zwischen der Folie 21 und der Polyolefinschaumstoffbahn 23 handelt es sich um eine Kombination aus einer Klebe- und Flammkaschierung unter Einsatz eines wärmeaktivierbaren vernetzenden Haftvermittlers, der auch die spätere Hochfrequenzerwärmung ohne Auflöseerscheinungen durchsteht. Diese Trittschutzauflage 2 wird vorzugsweise als Bahnenware vorgefertigt und dann in den gewünschten Abmessungen ausgestanzt und mit der Bodenmatte 1 verbunden.

In den Fig. 4 und 5 ist schematisch der Aufbau von Bodenmatte 1 mit Trittschutzauflage 2 entsprechend dem Aufbau der Bodenmatte einschichtig oder zweischichtig nach Fig. 1 und 2 dargestellt.

Die Verbindung der Trittschutzauflage mit der Bodenmatte erfolgt durch Anwendung des Hochfrequenzschweißens, wobei die unlösbare Verbindung durch den nachfolgend beschriebenen Wärmeablauf bewirkt wird.

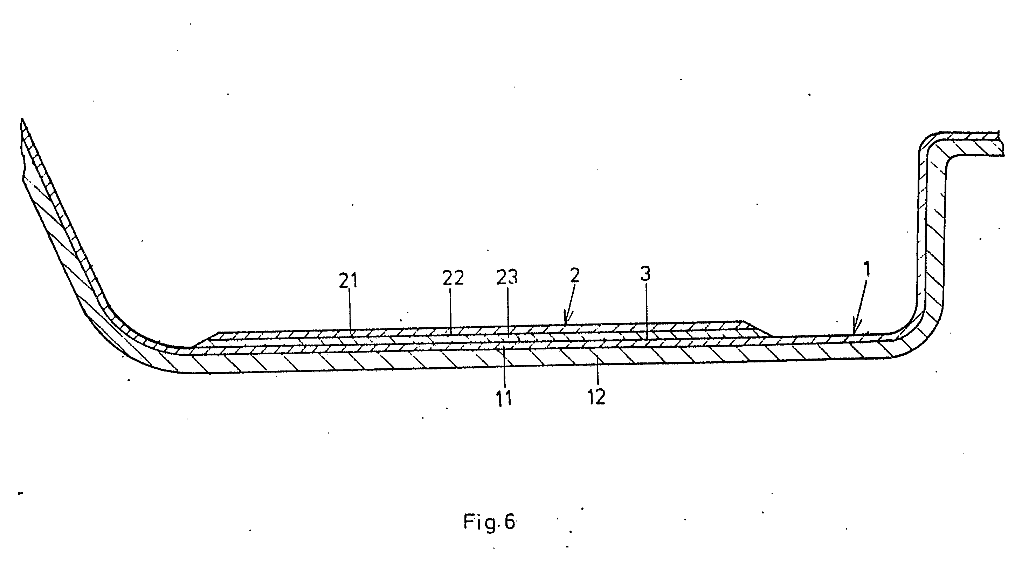

Die Trittschutzauflage 2 wird beispielsweise wie in der Fig. 6 dargestellt, lose auf die geformte Bodenmatte 1 positionsgerecht aufgelegt und dergestalt einem Hochfrequenzfeld ausgesetzt. In diesem Hochfrequenzfeld erwärmt sich die Folie 21 aus Weich-PVC aufgrund des Dipolcharakters des thermoplastischen Kunststoffes sehr schnell. Diese Primärwärme wird von der Folie 21 sekundär auf die Polyäthylenschaumstoffschicht 23 übertragen, die ebenfalls wie die Folie 21 plastisch wird und auf diese Weise die Oberschicht 11 bzw. 10 der Bodenmatte 1 aus Polyolefinschaumstoff anschmilzt. Die beiden Polyolefinschaumstoffschichten 23 und 11 bzw. 10 verschmelzen nun miteinander und es entsteht eine homogene Verbindung, die nur durch Zerstörung der Polyolefinschaumstoffschichten gelöst werden kann. Durch das Verschmelzen der beiden Schichten entsteht im Verbindungsbereich 3 ebenfalls eine kompakte Schicht. Bei diesem Vorgang der Hochfrequenzfeldeinwirkung löst sich jedoch die Verbindung zwischen der Folie 21 und der Polyäthylenschaumstoffschicht 23 nicht, da der Haftvermittler 22 bereits vernetzt ist. Der gesamte Verbindungsvorgang von Trittschutzauflage 2 und Bodenmatte 1 wird in einer sogenannten Hochfrequenzpresse unter Einwirkung von Druck vorgenommen, wobei das Hochfrequenzwerkzeug so gestaltet sein kann, daß es während des Verbindungsvorganges gleichzeitig unter Ausnutzung der durch die Erwärmung plastisch gewordenen Folie 21 diese mit einer dekorativen Prägung versieht. Die Verbindung der Trittschutzauflage 2 mit der Bodenmatte 1 kann ganzflächig oder auch nur linienförmig erfolgen. Bevorzugt wird jedoch eine ganzflächige Verbindung. Es ist auch möglich, zwischen der Bodenmatte und der Trittschutzauflage insbesondere gitterförmige Verstärkungseinlagen, wie Glasgelege einzuschweißen, die eine zusätzliche Verbesserung des Trittschutzes ergeben und insbesondere eine spätere Flächendehnung bei Druckbelastung verhindern.

Wesentlich für die Erfindung ist auch, daß die Schaumstruktur der Bodenmatte im Bereich der Verbindungsfläche 3 im Bereich der Schweißung durch die nur oberflächlich wirkende Sekundarerwärmung weitgehend erhalten bleibt.

## Patentansprüche

1. Bodenmatte aus vernetztem Polyolefinschaumstoff, insbesondere für die Auskleidung der Innenräume von Kraftfahrzeugen, gekennzeichnet durch eine haftfest aufgebrachte Trittschutzauflage (2) aus einem Verbund einer im hochfrequenten elektrischen Feld dielektrisch erwärmbaren thermoplastischen Kunststoffolie (21) mit einer vernetzten Polyolefinschaumstoffschicht (23), wobei die Polyolefinschaumstoffschichten (21, 10 bzw. 11) der Trittschutzauflage (2) und der Bodenmatte (1) mittels Erwärmung im Hochfrequenzfeld miteinander verschweißt sind und die Schaumstruktur der Bodenmatte im Bereich der Verbindungsfläche (3) weitgehend erhalten bleibt.

2. Bodenmatte nach Anspruch 1, dadurch gekennzeichnet, daß Folien (21) aus Kunststoff mit einer Dielektrizitätskonstanten von 2,5 bis 6 und einem dielektrischen Verlustfaktor größer als $1,5 \cdot 10^{-3}$, insbesondere Polyvinylchlorid bzw. Weichpolyvinylchlorid, ABS-Polymere, Ethylencopolymerisate oder Polyamide vorgesehen sind.

3. Bodenmatte nach Anspruch 1 oder 2, dadurch gekennzeichnet, daß chemisch vernetzter Polyethylenschaumstoff verwendet ist.

4. Bodenmatte nach einem der Ansprüche 1 bis 3, dadurch gekennzeichnet, daß die die Trittschutzauflage (2) bildende Kunststoffolie (21) und Polyolefinschaumstoffschicht (23) mittels eines unter Wärmeeinwirkung vernetzbaren Haftvermittlers (22) verbunden sind.

5. Bodenmatte nach Anspruch 4, gekennzeichnet durch eine Trittschutzauflage (2) aus einer Weich-PVC-Folie (21), die unter Verwendung eines hydroxylgruppenhaltigen Acrylharzes und eines Härters auf Isocyanatbasis (22) mit einer chemisch vernetzten Polethylenschaumstoffschicht (23) flammkaschiert ist.

6. Bodenmatte nach einem der Ansprüche 1 bis 5, dadurch gekennzeichnet, daß die Bodenmatte (1) aus einer Polyolefinschaumstoffbahn unter Einwirkung von Druck und Wärme geformt ist.

7. Bodenmatte nach einem der Ansprüche 1 bis 6, dadurch gekennzeichnet, daß zwischen Bodenmatte (1) und Trittschutzauflage (2) eine gitterförmige bzw. grobmaschige Verstärkungseinlage, insbesondere ein Gelege aus Glasfasern oder Polyesterfasern, vorgesehen ist.

8. Bodenmatte nach einem der Ansprüche 1 bis 7, dadurch gekennzeichnet, daß die Bodenmatte (1) aus einer chemisch vernetzten Polyethylenschaumstoffbahn (10) mit einer Raumdichte von 100 bis 150 kg/m³ und einer Dicke von 5 bis 10 mm geformt ist.

9. Bodenmatte nach einem der Ansprüche 1 bis 7, dadurch gekennzeichnet, daß die Bodenmatte (1) aus zwei vollflächig miteinander verbundenen Bahnen (11, 12) aus chemisch vernetztem Polyethylenschaumstoff geformt ist, wobei die die Nutzseite bildende Polyethylenschaumstoffbahn (11) eine Raumdichte von 150 bis 200 kg/m³ und eine Dicke von 2 bis 5 mm und die die Rückseite bildende Polyethylenschaumstoffbahn (12) eine Raumdichte von 30 bis 70 kg/m³ und eine Dicke von 4 bis 10 mm aufweisen.

10. Bodenmatte nach einem der Ansprüche 1 bis 9, dadurch gekennzeichnet, daß zwischen Bodenmatte (1) und Trittschutzauflage (2) eine mittels Hochfrequenz erwärmbare Hilfsschweißfolie, insbesondere aus einem Schmelzkleber oder einer Ethylen-Vinylacetat-Copolymerfolie mit einem Acetatanteil von 8 bis 60% vorgesehen ist.

11. Bodenmatte nach einem der Ansprüche 1 bis 10, dadurch gekennzeichnet, daß die Polyolefinschaumstoffschicht (23) für die Trittschutzauflage (2) eine Raumdichte von 70 bis 100 kg/m³ und eine Dicke von 2 bis 5 mm aufweist.

## Claims

1. Floor mat of cross-linked polyolefin foam, in particular for the cladding of the inside of motor vehicles, characterized by a strongly adheringly applied covering (2) portecting against feet and formed of a combination of a thermoplastic plastics foil (21) dielectrically heatable in the high frequency electric field with a cross-linked polyolefin foam layer (23), with the polyolefin foam layers (21, 10 or 11) of the covering (2) protecting against feet and the floor mat (1) being welded with one another by heating in the high frequency field and the foam structure of the floor mat being substantially retained in the region of the connecting plane (3).

2. Floor mat according to claim 1, characterized in that there are provided foils (21) made of plastics with a dielectric coefficient of 2.5 to 6 and a dielectric loss factor greater than $1.5 \cdot 10^{-3}$, in particular polyvinylchloride or soft polyvinylchloride, ABS polymers, ethylene copolymers or polyamides.

3. Floor mat according to claim 1 or 2, characterized in that chemically cross-linked polyethylene foam is used.

4. Floor mat according to one of claims 1 to 3, characterized in that the plastics foil (21) forming the covering (2) protecting against feet and polyolefin foam layer (23) are connected by means of a bonding agent (22) cross-linkable under the effect of heat.

5. Floor mat according to claim 4, characterized by a covering (2) protecting against feet formed of a soft PVC foil (21) which is flame laminated with a chemically cross-linked polyethylene foam layer (23) using a hydroxyl group-containing acrylic resin and an isocyanate-based hardener (22).

6. Floor mat according to one of claims 1 to 5, characterized in that the floor mat (1) is moulded from a polyolefin foam length under the effect of pressure and heat.

7. Floor mat according to one of claims 1 to 6, characterized in that there is provided between floor mat (1) and covering (2) protecting against feet a lattice shaped or coarse mesh reinforcing insert, in particular a layer of glass fibres or polyester fibres.

8. Floor mat according to one of claims 1 to 7, characterized in that the floor mat (1) is moulded from a chemically cross-linked polyethylene foam length (10) with a bulk density of 100 to 150 kg/m³ and a thickness of 5 to 10 mm.

9. Floor mat according to one of claims 1 to 7, characterized in that the floor mat (1) is moulded from two coextensive connected lengths (11, 12) of chemically cross-linked polyethylene foam, with the polyethylene foam length (11) forming the use side possessing a bulk density of 150 to 200 kg/m³ and a thickness of 2 to 5 mm and the polyethylene foam length (12) forming the reverse side possessing a bulk density of 30 to 70 kg/m³ and a thickness of 4 to 10 mm.

10. Floor mat according to one of claims 1 to 9, characterized in that between floor mat (1) and layer (2) protecting against feet there is provided a welding auxiliary foil heatable by means of high frequency, formed, in particular, of a melt adhesive or an ethylene-vinylacetate copolymer foil with an acetate content of 8 to 60%.

11. Floor mat according to one of claims 1 to 10, characterized in that the polyolefin foam layer (23) for the layer (2) protecting against feet possesses a bulk density of 70 to 100 kg/m³ and a thickness of 2 to 5 mm.

**Revendications**

1. Tapis de sol en matière cellulaire polyoléfinique réticulée, en particulier pour le garnissage des espaces intérieurs d'automobiles, caractérisé par une application de protection d'entrée (2), appliquée de façon fortement adhérente et constituée par l'association d'une feuille de matière thermoplastique (21), chauffable diélectriquement dans un champ électrique à haute fréquence, avec une couche de matière cellulaire polyoléfinique réticulée (23), les couches de matière cellulaire polyoléfinique (21, 10 ou 11) de l'application de protection d'entrée (2) et du tapis de sol (1) étant soudées ensemble grâce à l'échauffement dans le champ à haute fréquence et la structure cellulaire du tapis de sol se conservant largement dans la région de la surface de raccordement (3).

2. Tapis de sol selon la revendication 1, caractérisé en ce que sont prévues des feuilles (21) en matière plastique ayant une constante diélectrique de 2,5 à 6 et un facteur de perte diélectrique supérieur à $1,5 \cdot 10^{-3}$, en particulier en chlorure de polyvinyle ou chlorure de polyvinyle souple, en polymères ABS, en copolymères d'éthylène ou en polyamides.

3. Tapis de sol selon la revendication 1 ou 2, caractérisé en ce que l'on utilise de là matière cellulaire en polyéthylène chimiquement réticulée.

4. Tapis de sol selon l'une des revendications 1 à 3, caractérisé en ce que la feuille de matière plastique (21) constituant l'application de protection d'entrée (2) et la couche de matière cellulaire polyoléfinique (23) sont raccordées au moyen d'un promoteur d'adhérence (22) réticulable sous l'action de la chaleur.

5. Tapis de sol selon la revendication 4, caractérisé par une application de protection d'entrée (2) en une feuille de PVC souple (21) qui, par l'emploi d'une résine acrylique renfermant des groupes hydroxyle et d'un durcissant à base d'isocyanate (22), est contre-collée à la flamme avec une couche de matière cellulaire en polyéthylène chimiquement réticulée (23).

6. Tapis de sol suivant l'une des revendications 1 à 5, caractérisé en ce que le tapis de sol (1), en une bande de matière cellulaire polyoléfinique, est mis en forme sous l'action de la pression et de la chaleur.

7. Tapis de sol suivant l'une des revendications 1 à 6, caractérisé en ce qu'entre le tapis de sol (1) et l'application de protection d'entrée (2) est prévue une insertion de renforcement en forme de treillis ou à larges mailles, en particulier une assise en fibres de verre ou en fibres polyester.

8. Tapis de sol suivant l'une des revendications 1 à 7, caractérisé en ce que le tapis de sol (1) est moulé à partir d'une bande de matière cellulaire en polyéthylène réticulée chimiquement (10) ayant une densité apparente de 100 à 150 kg/m³ et une épaisseur de 5 à 10 mm.

9. Tapis de sol suivant l'une des revendications 1 à 7, caractérisé en ce que le tapis de sol (1) est moulé à partir de deux bandes raccordées entre elles sur toute leur surface (11, 12) en de la matière cellulaire de polyéthylène chimiquement réticulée, la bande de matière cellulaire en polyéthylène constituant le côté utile (11) présentant une densité apparente de 150 à 200 kg/m³ et une épaisseur de 2 à 5 mm, tandis que la bande de matière cellulaire en polyéthylène constituant le côté arrière (12) présente une densité apparente de 30 à 70 kg/m³ et une épaisseur de 4 à 10 mm.

10. Tapis de sol suivant l'une des revendications 1 à 9, caractérisé en ce qu'entre le tapis de sol (1) et l'application de protection d'entrée (2) est prévue une feuille de soudage auxiliaire chauffable par haute fréquence, en particulier en un adhésif à fondre ou en une feuille de copolymère éthylène-acétate de vinyle ayant une proportion d'acétate de 8 à 60%.

11. Tapis de sol suivant l'une des revendications 1 à 10, caractérisé en ce que la couche de matière cellulaire polyoléfinique (23) pour l'application de protection d'entrée (2), présente une densité apparente de 70 à 100 kg/m³ et une épaisseur de 2 à 5 mm.

Fig.1

Fig.2

Fig.3

Fig.4

Fig.5

Fig. 6

21   22   23   2   3   1

11   12

0 028 715

Fig.7